# EUROPÄISCHE PATENTSCHRIFT

(11) **EP 4 415 540 B1**
(45) Veröffentlichungstag und Bekanntmachung des Hinweises auf die Patenterteilung: **02.12.2026**
(21) Anmeldenummer: 22808586.6
(22) Anmeldetag: 05.10.2022
(51) Int. Cl.: A01N 43/80, A01N 43/40, A01N 59/16, A01P 1/00

(54) **VERFAHREN ZUR BEHANDLUNG VON TECHNISCHEN PRODUKTEN**
METHOD FOR TREATING TECHNICAL PRODUCTS
PROCÉDÉ POUR LE TRAITEMENT DES PRODUITS TECHNIQUES

(30) Priorität: 15.10.2021 EP 21000292
(43) Veröffentlichungstag der Anmeldung: 21.08.2024
(73) Patentinhaber: THOR GmbH, 67346 Speyer (DE)
(72) Erfinder: BAUM, Rüdiger, 67346 Speyer (DE); WUNDER, Thomas, 67435 Neustadt a.d. Weinstrasse (DE); GRABBE, Roman, 67435 Neustadt / Weinstrasse (DE)
(86) Internationale Anmeldenummer: PCT/EP2022/000090
(87) Internationale Veröffentlichungsnummer: WO 2023/061620

(56) Entgegenhaltungen:
- WO-A1-2015/082063
- WO-A1-2016/034266
- WO-A1-2017/148572

## Beschreibung

Die Erfindung betrifft ein Verfahren zur Verminderung mikrobiellen Befalls eines wässrigen technischen Produktes, umfassend die Schritte: (a) Bereitstellen eines wässrigen technischen Produktes, beispielsweise einer Farbe, mit einem pH-Wert im Bereich von 7,0 bis 9,5, enthaltend: i. 25 bis 100 ppm 5-Chlor-2-methyl-4-isothiazolon (CMIT) und ii. 50 ppm bis 1000 ppm einer oder mehrerer Zinkverbindungen, ausgewählt aus der Gruppe bestehend aus Zinkoxid, Zinkcarbonat und Zinkhydroxid, (b) Zersetzen eines Teils des CMITs durch Zugabe von mindestens einer Pyrithionverbindung, ausgewählt aus Natriumpyrithion, Kaliumpyrithion und Kalziumpyrithion in einer Gesamtmenge im Bereich von 25 ppm bis 500 ppm, so dass die Konzentration des CMITs in dem technischen Produkt im Bereich von 5 bis 15 ppm liegt und (c) Lagern des technischen Produkts über einen Zeitraum von bis zu 9 Monaten.

Technische, insbesondere wässrige Produkte, wie Farben, Lacke, Emulsionen und kosmetische Produkte werden üblicherweise unter Verwendung natürlicher oder biologisch abbaubarer Rohstoffe hergestellt. Diese Rohstoffe und das als Lösemittel verwendete Wasser sind dabei häufig mit Keimen, wie Bakterien, Hefen und Pilzen belastet. Verzichtet man bei der Herstellung dieser Produkte auf eine Konservierung, so können diese bereits einen Tag nach der Herstellung hohe Keimzahlen aufweisen.

Um sicherzustellen, dass diese Produkte den hygienischen Anforderungen gerecht werden, und damit die Haltbarkeit der technischen Produkte gewährleistet ist, werden den Produkten so genannte Biozide hinzugegeben. Eines dieser Biozide ist das 5-Chlor-2-methyl-4-isothiazolon (CMIT). Dieses weist eine gute biozide Wirkung auf, hat aber bei der praktischen Handhabung verschiedene Nachteile. Beispielsweise kann diese Verbindung bei Personen, die damit umgehen, Allergien auslösen.

Um die Nachteile dieses zwar äußerst wirksamen, aber auch mit Nachteilen für den Endanwender behafteten CMITs zu überwinden, kommt seit Anfang der 90er Jahre die in der EP 1 005 271 B1 offenbarte Mischung der Isothiazolinone 2-Methylisothiazolin-3-on (MIT) und 1,2-Benzisothiazolin-3-on (BIT) als Biozidzusammensetzung zum Einsatz. Diese Mischung wird von der Thor GmbH (Speyer, Bundesrepublik Deutschland) als Acticide^{®} MBS vertrieben und stellt zu heutiger Zeit einen der Standards bei der Gebindekonservierung von wasserbasierenden Farben und Putzen dar. Darüber hinaus lässt sich derzeit ein Trend hin zu isothiazolinonarmen Konservierungen beobachten.

Diese Biozidzusammensetzung hat den Vorteil, dass sie durch die gezielte Auswahl der beiden Isothiazolinone eine hohe Wirksamkeit mit einem -im Vergleich zu dem 5-Chlor-2-methyl-4-isothiazolon deutlich geringen Sensibilisierungspotential vereint.

Trotz des Ausweichens auf Acticide^{®} MBS als Alternative zu dem 5-Chlor-2-methyl-4-isothiazolon ist in den mit Acticide^{®} MBS konservierten Produkten noch immer das MIT enthalten, welches bei Allergikern beziehungsweise bei Personen mit hohem Sensibilisierungsgrad, Kontaktekzeme und auch aerogene Kontaktekzeme hervorrufen kann.

Aufgrund der eingangs geschilderten Umstände ist jedoch ein gänzlicher Verzicht auf wirksame Konservierungsmittel, insbesondere auf das hochwirksame 5-Chlor-2-methyl-4-isothiazolon nicht wünschenswert.

Neuere Einsatzzwecke des 5-Chlor-2-methyl-4-isothiazolons werden in der Internationalen Offenlegungsschrift WO 2015/082063 A1 und der Internationalen Offenlegungsschrift WO 2017/148572 A1 aufgezeigt. In diesen Dokumenten werden Verfahren zur Verminderung mikrobiellen Befalls von technischen Produkten, wie Farben und Putzen beschrieben, in deren Rahmen das 5-Chlor-2-methyl-4-isothiazolin-3-on eingesetzt wird, und mit Hilfe einer so genannten 5-Chlor-2-methyl-4-isothiazolon-zersetzenden Verbindung irreversibel und vollständig zerstört wird, so dass in dem Endprodukt kein 5-Chlor-2-methyl-4-isothiazolon mehr enthalten ist, welches Personen mit einem hohem Sensibilisierungsgrad gegenüber 5-Chlor-2-methyl-4-isothiazolon Probleme bereiten könnte.

Die in den vorstehend zitierten Dokumenten offenbarten Verfahren ermöglichen zwar in vorteilhafter Weise wieder den Einsatz des 5-Chlor-2-methyl-4-isothiazolons, da dies jedoch im Rahmen der beschriebenen Verfahren vollständig zersetzt bzw. abgebaut wird, ist es in den Produkten als Langzeitkonservierer nicht länger enthalten, was den Einsatz von weiteren Konservierungsmitteln zur Langzeit- bzw. Lagerkonservierung in vergleichsweise hoher Konzentration notwendig macht.

Eine Aufgabe der Erfindung ist es daher, ein Verfahren zur Verminderung mikrobiellen Befalls eines wässrigen technischen Produktes zur Verfügung zu stellen, in dessen Rahmen das 5-Chlor-2-methyl-4-isothiazolon nicht nur als quick-kill Biozid sondern auch als Langzeitkonservierer bei der Herstellung, bzw. Behandlung eines technischen Produkts genutzt werden kann.

Gelöst wird diese Aufgabe durch ein Verfahren zur Verminderung mikrobiellen Befalls eines wässrigen technischen Produktes, umfassend die Schritte:
(a) Bereitstellen eines wässrigen technischen Produktes mit einem pH-Wert im Bereich von 7,0 bis 9,5, enthaltend:
   i. 25 bis 100 ppm, bevorzugt 25 ppm bis 75 ppm, besonders bevorzugt 25 ppm bis 50 ppm 5-Chlor-2-methyl-4-isothiazolon und
   ii. 50 ppm bis 1000 ppm, 75 ppm bis 750 ppm, besonders bevorzugt 100 ppm bis 500 ppm einer oder mehrerer Zinkverbindung(en), ausgewählt aus der Gruppe bestehend aus Zinkoxid, Zinkcarbonat und Zinkhydroxid,
(b) Zersetzen eines Teils des 5-Chlor-2-methyl-4-isothiazolons durch Zugabe von mindestens einer Pyrithionverbindung, ausgewählt aus Natriumpyrithion, Kaliumpyrithion und Kalziumpyrithion in einer Gesamtmenge im Bereich von 25 ppm bis 500 ppm, bevorzugt im Bereich von 50 ppm bis 250 ppm, besonders bevorzugt im Bereich von 75 ppm bis 250 ppm, so dass die Konzentration des CMITs in dem technischen Produkt im Bereich von 5 bis 15 ppm, bevorzugt im Bereich von 10 bis 15 ppm liegt, und
(c) Lagern des technischen Produkts über einen Zeitraum von bis zu 9 Monaten.

Die im Rahmen der vorliegenden Erfindung in ppm angegebenen Mengen beziehen sich auf den Anteil der jeweiligen Komponente in Bezug auf das Produkt.

Die vorliegende Erfindung ermöglicht es in vorteilhafter Weise, das 5-Chlor-2-methylisothiazolin-3-on nicht nur als quick-kill Biozid, sondern auch als Langzeitkonservierer bei der Herstellung, bzw. Behandlung von technischen Produkten einzusetzen. Da das 5-Chlor-2-methyl-4-isothiazolon in den Endprodukten noch in relativ geringen Konzentrationen enthalten ist, wirkt es noch immer effektiv einer möglichen Nachverkeimung während des Transportes und der Lagerung der Produkte im Behältnis entgegen. Dies gilt sowohl für die Verkeimung des Produktes selbst, als auch für Produktanhaftungen und Kondensat an Wandungen und Deckel im Behältnis. Hierdurch können geringere Mengen an weiteren Bioziden zur Langzeitkonservierung der Produkte zugesetzt werden. Aufgrund der vergleichsweisen geringen Konzentrationen des 5-Chlor-2-methyl-4-isothiazolon in den Endprodukten, sind diese zudem für den Endanwender als weitgehend unproblematisch anzusehen.

Das wässrige technische Produkt, das in dem Verfahrensschritt (a) bereitgestellt wird, ist allgemein ein Produkt, ausgewählt aus der Gruppe, bestehend aus Farben, wie Aussenfarben, Innenraumfarben und Holzfarben für innen und aussen, Lacken, Lasuren, Druckfarben, pastösen Putzen, wie Aussen- und Innenputzen, Spachtelmassen, Emulsionen, Latices, Polymerdispersionen, Grundierungen, Kreideaufschlämmungen, mineralischen Slurries, keramischen Massen, Klebstoffen, Dichtstoffen, Bitumenemulsionen, Tensidlösungen, Reinigungsmitteln, Pigmentpasten und Pigmentdispersionen, Pigmentslurries, Verdickern, kosmetischen Produkten, Toilettenartikeln, lithografischen Flüssigkeiten, Flüssigkeiten bei der Papierverarbeitung, Flüssigkeiten bei der Lederherstellung und Flüssigkeiten bei der Textilherstellung. Besonders bevorzugt wird als technisches Produkt eine Farbe oder ein Putz bereitgestellt. Der Wassergehalt der technischen Produkte kann über weite Bereiche hinweg variieren und liegt allgemein im Bereich von 5 bis 80 Gew.-%.

Der pH-Wert des wässrigen technischen Produkts liegt im Bereich von 7,0 bis 9,5, bevorzugt im Bereich von pH 7,5 bis 9,0.

Die vorliegende Erfindung betrifft allgemein ein Verfahren zur Verminderung mikrobiellen Befalls eines wässrigen technischen Produktes. Unter "zur Verminderung mikrobiellen Befalls eines Produktes" ist im Sinne der Erfindung zu verstehen, dass durch das Einbringen des 5-Chlor-2-methyl-4-isothiazolin-3-ons in das technische Produkt, das mikrobielle Wachstum der in dem Produkt enthaltenen Mikroorganismen nachweislich verlangsamt bzw. gänzlich unterbunden wird.

Gemäß einer bevorzugten Ausführungsform der Erfindung wird das erfindungsgemäße Verfahren im Rahmen der Herstellung der technischen Produkte durchgeführt. Hierbei wird in Verfahrensschritt (a) ein wässriges technisches Produkt mit einem pH-Wert im Bereich von 7,0 bis 9,5 durch Vermischen der Einzelkomponenten des technischen Produktes hergestellt, welches:
i. 25 bis 100 ppm, bevorzugt 25 ppm bis 75 ppm, besonders bevorzugt 25 ppm bis 50 ppm 5-Chlor-2-methyl-4-isothiazolon (CMIT) und
ii. 50 ppm bis 1000 ppm, 75 ppm bis 750 ppm, besonders bevorzugt 100 ppm bis 500 ppm einer oder mehrerer Zinkverbindung(en), ausgewählt aus der Gruppe bestehend aus Zinkoxid, Zinkcarbonat und Zinkhydroxid enthält.

Das in dem Produkt enthaltene 5-Chlor-2-methyl-4-isothiazolon wird nach der Herstellung in Verfahrensschritt (b) durch Zugabe von mindestens einer Pyrithionverbindung, die ausgewählt ist aus Natriumpyrithion, Kaliumpyrithion und Kalziumpyrithion in einer Gesamtmenge im Bereich von 25 ppm bis 500 ppm, bevorzugt im Bereich von 50 ppm bis 250 ppm, besonders bevorzugt im Bereich von 75 ppm bis 150 ppm, teilweise zersetzt, so dass die Konzentration des CMITs in dem technischen Produkt im Bereich von 5 bis 15 ppm, bevorzugt im Bereich von 10 bis 15 ppm, liegt.

Gemäß einer alternativen bevorzugten Ausführungsform der Erfindung wird das erfindungsgemäße Verfahren im Rahmen der Behandlung eines bereits hergestellten technischen Produkts, zum Zweck der Verminderung der Keimbelastung, durchgeführt.

Das in Verfahrensschritt (a) bereitgestellte bzw. hergestellte wässrige technische Produkt enthält als Langzeit- und Kurzzeitkonservierungsmittel 25 bis 100 ppm, bevorzugt 25 ppm bis 75 ppm, besonders bevorzugt 25 ppm bis 50 ppm 5-Chlor-2-methyl-4-isothiazolon. Die vergleichsweise hohe Einsatzkonzentration von 25 bis 150 ppm 5-Chlor-2-methyl-4-isothiazolon zu Beginn des Verfahrens ermöglicht eine rasche Abtötung der in dem Produkt enthaltenen Mikroorganismen, so dass beispielsweise die herstellungsbedingt in den Produkten enthaltenen Mikroorganismen, wie Bakterien, Hefen und Pilze effektiv und rasch inaktiviert werden. Das 5-Chlor-2-methyl-4-isothiazolon kann allgemein dem technischen Produkt gezielt als Konservierungsmittel hinzugegeben worden sein; es kann aber ebenso bei der Herstellung des technischen Produktes über eine Komponente bzw. einen mit 5-Chlor-2-methyl-4-isothiazolon konservierten Produktbestandteil in das technische Produkt eingebracht worden sein.

Gemäß einer Ausführungsform der Erfindung ist das in Verfahrensschritt (a) bereitgestellte technische Produkt im Wesentlichen frei von 2-Methyl-4-isothiazolon. Im Wesentlichen frei bedeutet dabei, dass das 2-Methyl-4-isothiazolon in einer Gesamtmenge von kleiner 10 ppm, bevorzugt in einer Gesamtmenge von kleiner 5 ppm, besonders bevorzugt im Bereich von 0 bis 1 ppm in dem bereitgestellten Produkt enthalten ist.

Gemäß einer bevorzugten Ausführungsform der Erfindung wird in Verfahrensschritt (a) ein technisches Produkt bereitgestellt bzw. hergestellt, das
i. 25 bis 100 ppm, bevorzugt 25 ppm bis 75 ppm, besonders bevorzugt 25 ppm bis 50 ppm 5-Chlor-2-methyl-4-isothiazolon (CMIT) mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, enthält.

Ein Fachmann kann das 5-Chlor-2-methyl-4-isothiazolon mit dem geforderten geringen Anteil an 2-Methyl-4-isothiazolin-3-on, welches gemäß dieser Ausführungsform der Erfindung in dem Produkt enthalten ist, aus Gemischen von 5-Chlor-2-methyl-4-isothiazolon und 2-Methylisothiazolin-3-on mit Hilfe ihm bekannter Trennverfahren, wie Chromatographie, Extraktion bzw. fraktionierter Fällung herstellen. Der Fachmann kann die Reinheit des 5-Chlor-2-methyl-4-isothiazolons bzw. dessen Gehalt mit Hilfe ihm bekannter Methoden, beispielsweise mittels quantitativer HPLC, bestimmen.

Das in Verfahrensschritt (a) bereitgestellte bzw. hergestellte wässrige technische Produkt enthält 50 ppm bis 1000 ppm, bevorzugt 75 ppm bis 750 ppm, besonders bevorzugt 100 ppm bis 500 ppm einer oder mehrerer Zinkverbindung(en), die ausgewählt sind aus der Gruppe bestehend aus Zinkoxid, Zinkcarbonat und Zinkhydroxid und Mischungen davon.

"Eine oder mehrere Zinkverbindungen" bedeutet im Rahmen der vorliegenden Erfindung, dass eine der genannten Zinkverbindungen, oder mehrere, also zwei, drei oder vier der genannten Zinkverbindungen in dem technischen Produkt enthalten sind. Die Mengenangaben in ppm beziehen sich auf die Gesamtmenge der in dem Produkt enthaltenen Zinkverbindung(en).

Gemäß einer bevorzugten Ausführungsform der Erfindung wird in Verfahrensschritt (a) ein technisches Produkt bereitgestellt, das 50 ppm bis 1000 ppm, 75 ppm bis 750 ppm, besonders bevorzugt 100 ppm bis 500 ppm Zinkoxid enthält.

In vorteilhafter Weise interagiert bzw. interagieren die in dem technischen Produkt enthaltene(n) Zinkverbindung(en) mit der in Verfahrensschritt (b) hinzugegebenen Pyrithionverbindung, und ermöglichen dadurch in überraschender Weise je nach Höhe der zugegebenen Pyrithionmenge den Teilabbau des in den technischen Produkten enthaltenen 5-Chlor-2-methyl-4-isothiazolin-3-ons innerhalb des gewünschten Zeitraums.

Um eine ungewünschte, vollständige Zersetzung des 5-Chlor-2-methyl-4-isothiazolons zu verhindern, ist die Zinkverbindung neben dem 5-Chlor-2-methyl-4-isothiazolon in dem technischen Produkt enthalten, bevor in Verfahrensschritt (b) ein Teil des 5-Chlor-2-methyl-4-isothiazolons durch Zugabe von mindestens einer Pyrithionverbindung zersetzt wird.

Bedingt durch den pH-Wert der technischen Produkte, der im Bereich von pH 7,0 bis 9,5 liegt, lässt sich in manchen Fällen ein geringer, pH-bedingter Abbau des 5-Chlor-2-methyl-4-isothiazolons beobachten. Um weitere Einflüsse in Bezug auf den möglichen unerwünschten Abbau des 5-Chlor-2-methyl-4-isothiazolons zu minimieren, sind gemäß einer bevorzugten Ausführung der Erfindung die bereitgestellten technischen Produkte im Wesentlichen frei von 5-Chlor-2-methyl-4-isothiazolon-zersetzenden Komponenten. Derartige Komponenten bzw. Verbindungen sind dem Fachmann auf dem technischen Gebiet bekannt. Im Wesentlichen frei bedeutet dabei, dass diese Komponenten in einer Gesamtmenge von kleiner 10 ppm, bevorzugt in einer Gesamtmenge von 5 ppm, besonders bevorzugt von kleiner 1 ppm in der bereitgestellten Zusammensetzung enthalten sind.

Gemäß einer bevorzugten Ausführungsform ist das bereitgestellte technische Produkt daher weitgehend bzw. gänzlich frei von:
i. Thiolverbindungen, wie Cystein, Mercaptoethanol, Mercaptopropionsäure, Methylmercaptopropionat, Glutathion, Thioglycolat, Natriumthiosulfat, Natriumbisulfit, Mercaptopyridin, Dithiothreitol, Mercaptoethansulfonat,
ii. Pyrithionverbindungen, wie Natriumpyrithion, Kaliumpyrithion und Kalziumpyrithion,
iii. Elektrophilen Verbindungen, die elektrophiler sind, als das 5-Chlor-2-methyl-4-isothiazolon.

Weitgehend bzw. gänzlich frei bedeutet dabei, dass die vorstehend genannten Komponenten i. bis iii. insgesamt in einer Gesamtmenge von kleiner 10 ppm, bevorzugt in einer Gesamtmenge von 5 ppm, besonders bevorzugt von kleiner 1 ppm in der bereitgestellten Zusammensetzung enthalten sind.

In Schritt (b) des erfindungsgemäßen Verfahrens wird ein Teil des in dem technischen Produkt enthaltenen 5-Chlor-2-methyl-4-isothiazolons durch Zugabe von mindestens einer Pyrithionverbindung, ausgewählt aus Natriumpyrithion, Kaliumpyrithion und Kalziumpyrithion zersetzt, wodurch der Gehalt an 5-Chlor-2-methyl-4-isothiazolon in dem technischen Produkt auf eine Menge im Bereich von 5 bis 15 ppm, bevorzugt im Bereich von 10 bis 15 ppm gesenkt wird.

Die mindestens eine Pyrithionverbindung wird dabei dem technischen Produkt in einer Menge bzw. in einer Gesamtmenge im Bereich von 25 ppm bis 500 ppm, bevorzugt im Bereich von 50 ppm bis 250 ppm, besonders bevorzugt im Bereich von 75 ppm bis 150 ppm hinzugegeben. Die jeweils notwendige Mindestmenge der Pyrithionverbindung(en) wird von einem Fachmann in Abhängigkeit von der angestrebten Endkonzentration an 5-Chlor-2-methyl-4-isothiazolon in dem jeweiligen Produkt bestimmt und eingesetzt. Die notwendige Gesamtmenge der eingesetzten Pyrithionverbindung(en) wählt der Fachmann unter Berücksichtigung des Einsatzzweckes aus. Sollen die Pyrithionverbindung(en) auch nach der Teilzersetzung des 5-Chlor-2-methyl-4-isothiazolons als so genannter Nachkonservierer bzw. Langzeitkonservierer in dem technischen Produkt enthalten sein, so wählt der Fachmann eine entsprechend höhere Einsatzmenge aus, so dass nach der teilweisen Zersetzung des 5-Chlor-2-methyl-4-isothiazolons eine wirksame Menge an Pyrithionverbindung(en) in dem technischen Produkt verbleibt.

"Mindestens eine Pyrithionverbindung" bedeutet im Rahmen der vorliegenden Erfindung, dass eine der genannten Pyrithionverbindungen, oder mehrere, also zwei oder drei der genannten Pyrithionverbindungen, in dem technischen Produkt enthalten sind. Die Mengenangaben in ppm beziehen sich auf die Gesamtmenge der in dem Produkt enthaltenen Pyrithionverbindung(en).

Gemäß einer bevorzugten Ausführungsform ist das erfindungsgemäße Verfahren dadurch gekennzeichnet, dass das Zersetzen des CMITs in Verfahrensschritt (b) durch Zugabe von Natriumpyrithion in einer Menge im Bereich von 25 ppm bis 500 ppm, bevorzugt im Bereich von 50 ppm bis 250 ppm, besonders bevorzugt im Bereich von 75 ppm bis 150 ppm erfolgt.

Die zielgerichtete teilweise Zersetzung bzw. Teilzersetzung des in dem in Verfahrensschritt (a) bereitgestellten oder hergestellten Produkt-enthaltenen 5-Chlor-2-methyl-4-isothiazolons, beginnt mit der Zugabe der mindestens einen Pyrithionverbindung in Verfahrensschritt (b). Den Zeitpunkt der Zugabe der mindestens einen Pyrithionverbindung wählt der Fachmann unter Berücksichtigung der jeweiligen mikrobiellen Belastung der technischen Produkte aus. Dieser kann im Rahmen der Herstellung des technischen Produktes beispielsweise am Ende des Herstellprozesses liegen. Handelt es sich bei dem Verfahren jedoch um ein Behandlungsverfahren, bei dem ein technisches Produkt mit einer hohen Keimbelastung behandelt wird, so lässt ein Fachmann das 5-Chlor-2-methyl-4-isothiazolon in hoher Konzentration länger wirken, bevor er dieses zum Teil durch Zugabe der mindestens einen Pyrithionverbindung zersetzt.

Im Rahmen von Verfahrensschritt (c) wird ein Teil des in den technischen Produkten enthaltenen 5-Chlor-2-methyl-4-isothiazolons mit Hilfe der wenigstens einen Pyrithionverbindung zersetzt bzw. abgebaut. Das Verfahren ist dabei gemäß einer Ausführungsform der Erfindung dadurch gekennzeichnet, dass das Zersetzen des 5-Chlor-2-methyl-4-isothiazolons in Verfahrensschritt (b) innerhalb eines Zeitraums im Bereich von 6 Stunden bis 336 Stunden, bevorzugt innerhalb eines Zeitraums von 12 Stunden bis 168 Stunden, besonders bevorzugt innerhalb eines Zeitraums im Bereich von 24 Stunden bis 96 Stunden nach Zugabe der mindestens einen Pyrithionverbindung erfolgt. Innerhalb der vorstehend definierten Zeiträume bedeutet dabei, dass das 5-Chlor-2-methyl-4-isothiazolon ab dem Zeitpunkt des Kontakts mit der wenigstens einen Pyrithionverbindung zersetzt bzw. abgebaut wird, so dass der Gesamtgehalt an 5-Chlor-2-methyl-4-isothiazolon nach diesen Zeiträumen im Bereich von 5 bis 15 ppm, bezogen auf das Produkt, liegt. Die zum jeweiligen Teilabbau notwendige Menge an Pyrithion ermittelt der Fachmann mit den ihm bekannten Methoden.

In Schritt (c) des erfindungsgemäßen Verfahrens wird das technische Produkt über einen Zeitraum von bis zu neun Monaten gelagert. Über diesen Zeitraum hinweg wirken das verbliebene 5-Chlor-2-methyl-4-isothiazolon und gegebenenfalls weitere in dem technischen Produkt enthaltene Konservierungsmittel als Langzeitkonservierer und stellen einen wirksamen Schutz vor mikrobiellem Befall sicher. Unter dem Begriff "Lagerung" wird im Sinne der vorliegenden Erfindung die Lagerung des technischen Produkts bis zur Konfektionierung bzw. Verkauf bzw. im Falle eines Zwischenproduktes, wie einer Polymerdispersion, die Zeitdauer bis zur Weiterverarbeitung verstanden.

Nach der teilweisen Zersetzung des 5-Chlor-2-methyl-4-isothiazolons in Verfahrensschritt (b) ist das Produkt idealerweise frei von mikrobiellem Befall, und durch die verbliebene Menge an 5-Chlor-2-methyl-4-isothiazolon auch gegen neu eingetragene Keime geschützt. Das hochreaktive und hydrolyseempfindliche 5-Chlor-2-methyl-4-isothiazolon unterliegt während der Lagerung des technischen Produkts in Verfahrensschritt (c) jedoch einem weiteren Abbau bzw. wird im Rahmen der Konservierung verbraucht, wodurch in manchen Fällen die Anwesenheit wenigstens eines weiteren Biozids zweckdienlich sein kann. Dieses weitere Biozid bzw. diese weiteren Biozide können aufgrund der Anwesenheit des 5-Chlor-2-methyl-4-isothiazolons in der vorstehend definierten Menge vorteilhafterweise in geringerer Menge zugesetzt werden. "Wenigstens ein weiteres Biozid" bedeutet im Rahmen der vorliegenden Erfindung, dass ein einziges Biozid, oder mehrere, also zwei, drei, vier, fünf oder mehr Biozide in dem technischen Produkt enthalten sein können.

Gemäß einer bevorzugten Ausführungsform der Erfindung wird daher in Verfahrensschritt (a) ein technisches Produkt bereitgestellt bzw. hergestellt, das ferner:
iii. 5 ppm bis 200 ppm, bevorzugt 5 ppm bis 100 ppm, besonders bevorzugt 5 ppm bis 15 ppm einer oder mehrerer Verbindungen, ausgewählt aus der Gruppe, bestehend aus 2-Methylisothiazolin-3-on (MIT), 2-n-Octyl-4-isothiazolin-3-on (OIT) und 2-Methyl-1,2-Benzisothiazolin-3-on (M-BIT) und/oder
iv. 5 ppm bis 500 ppm, bevorzugt 5 ppm bis 400 ppm, besonders bevorzugt 5 ppm bis 300 ppm 1,2-Benzisothiazolin-3-on (BIT) und/oder
v. 10 ppm bis 2000 ppm, bevorzugt 50 ppm bis 1000 ppm, besonders bevorzugt 100 ppm bis 750 ppm 1,2-Octandiol und/oder
vi. 10 ppm bis 2000 ppm, bevorzugt 50 ppm bis 1000 ppm, besonders bevorzugt 100 ppm bis 750 ppm Ethylhexylglycerin und/oder
vii. 10 ppm bis 9000 ppm, bevorzugt 100 ppm bis 6000 ppm, besonders bevorzugt 500 ppm bis 4500 ppm Phenoxyethanol und/oder
viii. 10 ppm bis 200 ppm, bevorzugt 50 ppm bis 150 ppm, besonders bevorzugt 75 ppm bis 100 ppm 3-Iodpropargyl-N-butylcarbamat (IPBC) enthält.

Gemäß einer alternativen bevorzugten Ausführungsform wird bzw. werden dem technischen Produkt im Rahmen des erfindungsgemäßen Verfahrens:
iii. 5 ppm bis 200 ppm, bevorzugt 5 ppm bis 100 ppm, besonders bevorzugt 5 ppm bis 15 ppm einer oder mehrerer Verbindungen, ausgewählt aus der Gruppe, bestehend aus 2-Methylisothiazolin-3-on (MIT), 2-n-Octyl-4-isothiazolin-3-on (OIT) und 2-Methyl-1,2-Benzisothiazolin-3-on (M-BIT) und/oder
iv. 5 ppm bis 500 ppm, bevorzugt 5 ppm bis 400 ppm, besonders bevorzugt 5 ppm bis 300 ppm 1,2-Benzisothiazolin-3-on (BIT) und/oder
v. 10 ppm bis 2000 ppm, bevorzugt 50 ppm bis 1000 ppm, besonders bevorzugt 100 ppm bis 750 ppm 1,2-Octandiol und/oder
vi. 10 ppm bis 2000 ppm, bevorzugt 50 ppm bis 1000 ppm, besonders bevorzugt 100 ppm bis 750 ppm Ethylhexylglycerin und/oder
vii. 10 ppm bis 9000 ppm, bevorzugt 100 ppm bis 6000 ppm, besonders bevorzugt 500 ppm bis 4500 ppm Phenoxyethanol und/oder
viii. 10 ppm bis 200 ppm, bevorzugt 50 ppm bis 150 ppm, besonders bevorzugt 75 ppm bis 100 ppm 3-Iodpropargyl-N-butylcarbamat (IPBC)
hinzugegeben.

Gemäß einer bevorzugten Ausführungsform wird bzw. werden dem technischen Produkt im Rahmen des erfindungsgemäßen Verfahrens ein oder mehrere Biozide, ausgewählt aus der Gruppe bestehend aus 1,2-Octandiol, 2-Methylisothiazolin-3-on, 1,2-Benzisothiazolin-3-on, 3-Iodpropargyl-N-butylcarbamat und 2-Methyl-1,2-Benzisothiazolin-3-on hinzugegeben. Gemäß einer besonders bevorzugten Ausführungsform wird bzw. werden dem technischen Produkt im Rahmen des erfindungsgemäßen Verfahrens ein oder mehrere Biozide, ausgewählt aus der Gruppe, bestehend aus 1,2-Octandiol, 2-Methylisothiazolin-3-on und 1,2-Benzisothiazolin-3-on hinzugegeben.

Die vorliegende Erfindung betrifft ferner ein Verfahren zum regulierbaren bzw. steuerbaren Teilabbau von 5-Chlor-2-methyl-4-isothiazolon in einem wie vorstehend definierten technischen Produkt, beziehungsweise in einem wässrigen technischen Produkt mit einem pH-Wert im Bereich von 7,0 bis 9,5, umfassend die Schritte:
(a) Vorlegen eines Produktes, enthaltend:
   i 25 ppm bis 100 ppm, bevorzugt 25 ppm bis 75 ppm, besonders bevorzugt 25 ppm bis 50 ppm 5-Chlor-2-methyl-4-isothiazolon (CMIT) und
   ii 50 ppm bis 1000 ppm, bevorzugt 75 ppm bis 750 ppm, besonders bevorzugt 100 ppm bis 500 ppm einer oder mehrerer Zinkverbindungen, ausgewählt aus der Gruppe bestehend aus Zinkoxid, Zinkcarbonat und Zinkhydroxid, und
(b) Zersetzen eines Teils des CMITs durch Zugabe von mindestens einer Pyrithionverbindung, ausgewählt aus Natriumpyrithion, Kaliumpyrithion und Kalziumpyrithion in einer Gesamtmenge im Bereich von 25 ppm bis 500 ppm, bevorzugt im Bereich von 50 ppm bis 250 ppm, besonders bevorzugt im Bereich von 75 ppm bis 250 ppm bezogen auf das Produkt, so dass die Konzentration des CMITs in dem Produkt im Bereich von 5 bis 15 ppm, bevorzugt im Bereich von 10 bis 15 ppm liegt.

Das Verfahren ist dabei gemäß einer Ausführungsform der Erfindung dadurch gekennzeichnet, dass das Zersetzen des 5-Chlor-2-methyl-4-isothiazolons in Verfahrensschritt (b) innerhalb eines Zeitraums im Bereich von 6 Stunden bis 336 Stunden, bevorzugt innerhalb eines Zeitraums von 12 Stunden bis 168 Stunden, besonders bevorzugt innerhalb eines Zeitraums im Bereich von 24 Stunden bis 96 Stunden nach Zugabe der mindestens einen Pyrithionverbindung erfolgt. Innerhalb der vorstehend definierten Zeiträume bedeutet dabei, dass das 5-Chlor-2-methyl-4-isothiazolon ab dem Zeitpunkt des Kontakts mit der wenigstens einen Pyrithionverbindung zersetzt bzw. abgebaut wird, so dass der Gesamtgehalt an 5-Chlor-2-methyl-4-isothiazolon nach diesen Zeiträumen im Bereich von 5 bis 15 ppm, bezogen auf das Produkt, liegt. Die zum jeweiligen Teilabbau notwendige Menge an Pyrithion und Zink ermittelt der Fachmann mit den ihm bekannten Methoden.

Im Zusammenhang mit der Ausführungsform betreffend das Verfahren zum regulierbaren bzw. steuerbaren Teilabbau von 5-Chlor-2-methyl-4-isothiazolon, wird auf die vorstehenden allgemeinen Ausführungen und Definitionen verwiesen.

Die vorliegende Erfindung betrifft weiterhin auch die Verwendung von mindestens einer Pyrithionverbindung, ausgewählt aus Natriumpyrithion, Kaliumpyrithion und Kalziumpyrithion in einer Menge im Bereich von 25 ppm bis 500 ppm, bevorzugt im Bereich von 50 ppm bis 250 ppm, besonders bevorzugt im Bereich von 75 ppm bis 150 ppm, bezogen auf das Produkt zum teilweisen Zersetzen von 5-Chlor-2-methyl-4-isothiazolon in einem wie vorstehend definierten technischen Produkt, beziehungsweise in einem wässrigen technischen Produkt mit einem pH-Wert im Bereich von 7,0 bis 9,5, enthaltend:
i 25 ppm bis 100 ppm, bevorzugt 25 ppm bis 75 ppm, besonders bevorzugt 25 ppm bis 50 ppm 5-Chlor-2-methyl-4-isothiazolon (CMIT) und
ii 50 ppm bis 1000 ppm, bevorzugt 75 ppm bis 750 ppm, besonders bevorzugt 100 ppm bis 500 ppm einer oder mehrerer Zinkverbindungen, ausgewählt aus der Gruppe bestehend aus Zinkoxid, Zinkcarbonat und Zinkhydroxid.

Die mindestens eine Pyrithionverbindung wird dabei so verwendet, dass das 5-Chlor-2-methyl-4-isothiazolon innerhalb eines Zeitraums im Bereich von 6 Stunden bis 336 Stunden, bevorzugt innerhalb eines Zeitraums von 12 Stunden bis 168 Stunden, besonders bevorzugt innerhalb eines Zeitraums im Bereich von 24 Stunden bis 96 Stunden nach Zugabe der mindestens einen Pyrithionverbindung bis auf einen Gehalt im Bereich von 5 bis 15 ppm, bevorzugt 10 bis 15 ppm in dem technischen Produkt zersetzt bzw. abgebaut wird, so dass der Gesamtgehalt an 5-Chlor-2-methyl-4-isothiazolon nach diesen Zeiträumen im Bereich von 5 bis 15 ppm, bezogen auf das Produkt, liegt. Die zum jeweiligen Teilabbau notwendige Menge an Pyrithion und Zink ermittelt der Fachmann mit den ihm bekannten Methoden.

Im Zusammenhang mit der Ausführungsform betreffend die Verwendung der mindestens einen Pyrithionverbindung, ausgewählt aus Natriumpyrithion, Kaliumpyrithion und Kalziumpyrithion in einer Menge im Bereich von 25 ppm bis 500 ppm zum teilweisen Zersetzen von 5-Chlor-2-methyl-4-isothiazolon wird auf die vorstehenden allgemeinen Ausführungen und Definitionen verwiesen.

### Die vorliegende Erfindung wird anhand des nachfolgend dargestellten Beispiels näher beschrieben:

In Aliquots einer handelsüblichen, matten wasserbasierenden konservierungsmittelfreien Dispersions-Innenfarbe (pH-Wert: 8,3, Bindemittel: Vinylacetat-Ethylen, Pigment-Volumen-Konzentration (PVK): 77%) wurden die in Tabelle 1 angegebenen Mengen an 5-Chlor-2-methyl-4-isothiazolon und Zinkoxid hinzugegeben und homogen eingearbeitet. Nach 30 bis 45 Minuten erfolgte dann die Zugabe des Natriumpyrithions. Als Kontrolle dienten jeweils Proben, die Chlor-2-methyl-4-isothiazolon und Natriumpyrithion ohne Zinkoxid enthielten, bzw. Proben, die nur Chlor-2-methyl-4-isothiazolon enthielten. Die Proben wurden bei 21°C gelagert und nach den in der Tabelle 1 angegebenen Zeitintervallen (4 Stunden, 24 Stunden, 72 Stunden, 168 Stunden und 336 Stunden) wurde die verbliebene Menge an Chlor-2-methyl-4-isothiazolon in der Farbe mit Hilfe von HPLC-Analysen bestimmt. Die Versuchsergebnisse sind in Tabelle 1 dargestellt.

**Tabelle 1**

| **NaPy [ppm]** | **CMIT [ppm]** | **ZnO [ppm]** | **CIMT [ppm] nach Lagerung bei 21 °C** | | | | |
|---|---|---|---|---|---|---|---|
| | | | **4 [h]** | **24 h** | **72 h** | **168 h** | **336 h** |
| 0 | 25 | 0 | 25 | 25 | 24 | 24 | 22 |
| 130 | 25 | 525 | 24 | 21 | 21 | 18 | 14 |
| 130 | 25 | 450 | 26 | 22 | 22 | 19 | 12 |
| 130 | 25 | 375 | 25 | 22 | 20 | 15 | 10 |
| 130 | 25 | 300 | 24 | 21 | 14 | 12 | 6 |
| 130 | 25 | 225 | 23 | 17 | 11 | 7 | 2 |
| 130 | 25 | 150 | 19 | 11 | 6 | 2 | <LOQ |
| 130 | 25 | 75 | 13 | 4 | 1 | <LOQ | <LOQ |
| 130 | 25 | 0 | <LOQ | <LOQ | <LOQ | <LOQ | <LOQ |
| | | | | | | | |
| 0 | 50 | 0 | 50 | 50 | 49 | 47 | 47 |
| 130 | 50 | 525 | 51 | 50 | 45 | 38 | 31 |
| 130 | 50 | 450 | 50 | 47 | 42 | 35 | 28 |
| 130 | 50 | 375 | 49 | 49 | 40 | 30 | 23 |
| 130 | 50 | 300 | 47 | 42 | 34 | 24 | 14 |
| 130 | 50 | 225 | 38 | 29 | 21 | 15 | 8 |
| 130 | 50 | 150 | 31 | 19 | 11 | 8 | 1 |
| 130 | 50 | 75 | 21 | 9 | 2 | <LOQ | <LOQ |
| 130 | 50 | 0 | 3 | <LOQ | <LOQ | <LOQ | <LOQ |
| 0 | 100 | 0 | 101 | 100 | 101 | 99 | 95 |
| 130 | 100 | 525 | 100 | 101 | 94 | 84 | 72 |
| 130 | 100 | 450 | 102 | 96 | 88 | 75 | 61 |
| 130 | 100 | 375 | 93 | 89 | 77 | 63 | 44 |
| 130 | 100 | 300 | 83 | 76 | 64 | 47 | 28 |
| 130 | 100 | 225 | 67 | 56 | 37 | 22 | 14 |
| 130 | 100 | 150 | 52 | 39 | 28 | 16 | 5 |
| 130 | 100 | 75 | 37 | 25 | 13 | 6 | <LOQ |
| 130 | 100 | 0 | 8 | <LOQ | <LOQ | <LOQ | <LOQ |

| | | | | | | | |
|---|---|---|---|---|---|---|---|
| < LOQ: Unterhalb der Bestimmungsgrenze (< 0,5 ppm CMIT); NaPy: Natriumpyrithion, CMIT: Chlor-2-methyl-4-isothiazolon, ZnO: Zinkoxyd. | | | | | | | |

Wie sich den in der Tabelle 1 wiedergegebenen Ergebnissen entnehmen lässt, kann ein Fachmann, ausgehend von unterschiedlichen Ausgangsmengen an Chlor-2-methyl-4-isothiazolon (25 ppm/50 ppm/100 ppm), unter Verwendung von 130 ppm Natriumpyrithion und variablen Mengen Zinkoxyd den ursprünglichen Gehalt an Chlor-2-methyl-4-isothiazolon in der Zusammensetzung innerhalb der gewünschten Zeit auf die angestrebte Zielmenge senken.

## Patentansprüche

1. Verfahren zur Verminderung mikrobiellen Befalls eines wässrigen technischen Produktes, umfassend die Schritte:
(a) Bereitstellen eines wässrigen technischen Produktes mit einem pH-Wert im Bereich von 7,0 bis 9,5, enthaltend:
i. 25 bis 100 ppm 5-Chlor-2-methyl-4-isothiazolon (CMIT) und
ii. 50 ppm bis 1000 ppm einer oder mehrerer Zinkverbindungen, ausgewählt aus der Gruppe, bestehend aus Zinkoxid, Zinkcarbonat und Zinkhydroxid,
(b) Zersetzen eines Teils des CMITs durch Zugabe von mindestens einer Pyrithionverbindung, ausgewählt aus Natriumpyrithion, Kaliumpyrithion und Kalziumpyrithion in einer Gesamtmenge im Bereich von 25 ppm bis 500 ppm, so dass die Konzentration des CMITs in dem technischen Produkt im Bereich von 5 bis 15 ppm liegt, und
(c) Lagern des technischen Produkts über einen Zeitraum von bis zu 9 Monaten.

2. Verfahren nach Anspruch 1, **dadurch gekennzeichnet, dass** in Verfahrensschritt (b) das Zersetzen eines Teils des CMITs innerhalb eines Zeitraums im Bereich von 6 Stunden bis 336 Stunden nach Zugabe der mindestens einen Pyrithionverbindung erfolgt.

3. Verfahren nach Anspruch 1 oder 2, **dadurch gekennzeichnet, dass** in Verfahrensschritt (a) ein technisches Produkt mit einem pH-Wert im Bereich von pH 7,5 bis pH 9,0 bereitgestellt wird.

4. Verfahren nach einem der Ansprüche 1 bis 3, **dadurch gekennzeichnet, dass** in Verfahrensschritt (a) ein technisches Produkt bereitgestellt wird, das
ii. 50 ppm bis 1000 ppm Zinkoxid enthält.

5. Verfahren nach einem der Ansprüche 1 bis 4, **dadurch gekennzeichnet, dass** das Zersetzen des CMITs in Verfahrensschritt (b) durch Zugabe von Natriumpyrithion in einer Menge im Bereich von 25 ppm bis 250 ppm erfolgt.

6. Verfahren nach einem der Ansprüche 1 bis 5, **dadurch gekennzeichnet, dass** in Verfahrensschritt (a) ein technisches Produkt bereitgestellt wird, das ferner:
iii. 5 ppm bis 200 ppm einer oder mehrerer Verbindungen, ausgewählt aus der Gruppe, bestehend aus 2-Methylisothiazolin-3-on, 1,2-Benzisothiazolin-3-on, 2-n-Octyl-4-isothiazolin-3-on und 2-Methyl-1,2-Benzisothiazolin-3-on und/oder
iv. 10 ppm bis 2000 ppm 1,2-Octandiol und/oder
v. 10 ppm bis 2000 ppm Ethylhexylglycerin und/oder
vi. 10 ppm bis 9000 ppm Phenoxyethanol und/oder
vi. 10 ppm bis 200 ppm 3-Iodpropargyl-N-butylcarbamat enthält.

7. Verfahren nach einem der Ansprüche 1 bis 6, **dadurch gekennzeichnet, dass** in Verfahrensschritt (a) ein technisches Produkt bereitgestellt wird, das
i. 25 bis 100 ppm 5-Chlor-2-methyl-4-isothiazolon (CMIT) mit einem Gehalt an 2-Methyl-4-isothiazolin-3-on im Bereich von 0 bis 2 Gew.- %, bezogen auf den Gesamtanteil des 5-Chlor-2-methyl-4-isothiazolin-3-ons, enthält.

8. Verfahren nach einem der Ansprüche 1 bis 7, **dadurch gekennzeichnet, dass** in Verfahrensschritt (a) ein technisches Produkt bereitgestellt wird, das ausgewählt ist aus Farben, wie Aussenfarben, Innenraumfarben und Holzfarben für innen und aussen, Lacken, Lasuren, Druckfarben, pastösen Putzen, wie Aussen- und Innenputzen, Spachtelmassen, Emulsionen, Latices, Polymerdispersionen, Grundierungen, Kreideaufschlämmungen, mineralischen Slurries, keramischen Massen, Klebstoffen, Dichtstoffen, Bitumenemulsionen, Tensidlösungen, Reinigungsmitteln, Pigmentpasten und Pigmentdispersionen, Pigmentslurries, Verdickern, kosmetischen Produkten, Toilettenartikeln, lithografischen Flüssigkeiten, Flüssigkeiten bei der Papierverarbeitung, Flüssigkeiten bei der Lederherstellung und Flüssigkeiten bei der Textilherstellung.

9. Verfahren nach einem der Ansprüche 1 bis 8, **dadurch gekennzeichnet, dass** in Verfahrensschritt (a) als technisches Produkt eine Farbe oder ein Putz bereitgestellt wird.

10. Verfahren nach einem der Ansprüche 1 bis 9, **dadurch gekennzeichnet, dass** das in Verfahrensschritt (a) bereitgestellte technische Produkt 2-Methyl-4-isothiazolon in einer Gesamtmenge von kleiner 10 ppm, bevorzugt in einer Gesamtmenge von kleiner 5 ppm, besonders bevorzugt im Bereich von 0 bis 1 ppm enthält.

11. Verfahren zum Teilabbau von 5-Chlor-2-methyl-4-isothiazolon, umfassend die Schritte:
(a) Vorlegen eines technischen Produktes, enthaltend:
i 25 ppm bis 100 ppm 5-Chlor-2-methyl-4-isothiazolon (CMIT) und
ii 50 ppm bis 1000 ppm einer oder mehrerer Zinkverbindungen, ausgewählt aus der Gruppe bestehend aus Zinkoxid, Zinkcarbonat und Zinkhydroxid, und
(b) Zersetzen eines Teils des CMITs durch Zugabe von mindestens einer Pyrithionverbindung, ausgewählt aus Natriumpyrithion, Kaliumpyrithion und Kalziumpyrithion in einer Gesamtmenge im Bereich von 25 ppm bis 500 ppm, bezogen auf das technische Produkt.

12. Verwendung von mindestens einer Pyrithionverbindung, ausgewählt aus Natriumpyrithion, Kaliumpyrithion und Kalziumpyrithion in einer Menge im Bereich von 25 ppm bis 500 ppm zum teilweisen Zersetzen von 5-Chlor-2-methyl-4-isothiazolon in einem technischen Produkt, enthaltend:
i 25 ppm bis 100 ppm 5-Chlor-2-methyl-4-isothiazolon (CMIT) und
ii 50 ppm bis 1000 ppm einer oder mehrerer Zinkverbindungen, ausgewählt aus der Gruppe bestehend aus Zinkoxid, Zinkcarbonat und Zinkhydroxid.

## Claims

1. A method for reducing microbial contamination of an aqueous industrial product, comprising the steps of:
(a) providing an aqueous industrial product having a pH in the range from 7.0 to 9.5, containing:
i. 25 to 100 ppm of 5-chloro-2-methyl-4-isothiazolinone (CMIT) and
ii. 50 ppm to 1000 ppm of one or more zinc compounds selected from the group consisting of zinc oxide, zinc carbonate and zinc hydroxide,
(b) decomposing a portion of the CMIT by addition of at least one pyrithione compound selected from sodium pyrithione, potassium pyrithione and calcium pyrithione in a total amount in the range from 25 ppm to 500 ppm, so that the concentration of the CMIT in the industrial product is in the range from 5 to 15 ppm, and
(c) storing the industrial product for a period of up to 9 months.

2. The method as claimed in claim 1, **characterized in that** the decomposition of a portion of the CMIT in method step (b) is effected within a period in the range from 6 hours to 336 hours after addition of the at least one pyrithione compound.

3. The method as claimed in claim 1 or 2, **characterized in that** an industrial product having a pH in the range from pH 7.5 to pH 9.0 is provided in method step (a).

4. The method as claimed in any of claims 1 to 3, **characterized in that** an industrial product is provided in method step (a) that contains
ii. 50 ppm to 1000 ppm of zinc oxide.

5. The method as claimed in any of claims 1 to 4, **characterized in that** the decomposition of the CMIT in method step (b) is effected by addition of sodium pyrithione in an amount in the range from 25 ppm to 250 ppm.

6. The method as claimed in any of claims 1 to 5, **characterized in that** an industrial product is provided in method step (a) that further contains:
iii. 5 ppm to 200 ppm of one or more compounds selected from the group consisting of 2-methylisothiazolin-3-one, 1,2-benzisothiazolin-3-one, 2-n-octyl-4-isothiazolin-3-one and 2-methyl-1,2-benzisothiazolin-3-one and/or
iv. 10 ppm to 2000 ppm of 1,2-octanediol and/or
v. 10 ppm to 2000 ppm of ethylhexylglycerol and/or
vi. 10 ppm to 9000 ppm of phenoxyethanol and/or
vi. 10 ppm to 200 ppm of 3-iodopropynyl N-butylcarbamate.

7. The method as claimed in any of claims 1 to 6, **characterized in that** an industrial product is provided in method step (a) that contains
i. 25 to 100 ppm of 5-chloro-2-methyl-4-isothiazolinone (CMIT) having a content of 2-methyl-4-isothiazolin-3-one in the range from 0% to 2% by weight, based on the total proportion of 5-chloro-2-methyl-4-isothiazolin-3-one.

8. The method as claimed in any of claims 1 to 7, **characterized in that** an industrial product is provided in method step (a) that is selected from paints, such as exterior paints, interior paints and interior and exterior wood paints, varnishes, stains, printing inks, pasty plasters/renders, such as external renders and internal plasters, filler compounds, emulsions, latices, polymer dispersions, primers, chalk suspensions, mineral slurries, ceramic materials, adhesives, sealants, bitumen emulsions, surfactant solutions, cleaning products, pigment pastes and pigment dispersions, pigment slurries, thickeners, cosmetic products, toiletries, lithographic liquids, liquids in paper processing, liquids in leather production and liquids in textile production.

9. The method as claimed in any of claims 1 to 8, **characterized in that** the industrial product provided in method step (a) is a paint or plaster/render.

10. The method as claimed in any of claims 1 to 9, **characterized in that** the industrial product provided in method step (a) contains 2-methyl-4-isothiazolinone in a total amount of less than 10 ppm, preferably in a total amount of less than 5 ppm, particularly preferably in the range from 0 to 1 ppm.

11. A method for partial degradation of 5-chloro-2-methyl-4-isothiazolinone, comprising the steps of:
(a) charging an industrial product containing:
i 25 ppm to 100 ppm of 5-chloro-2-methyl-4-isothiazolinone (CMIT) and
ii 50 ppm to 1000 ppm of one or more zinc compounds selected from the group consisting of zinc oxide, zinc carbonate and zinc hydroxide, and
(b) decomposing a portion of the CMIT by addition of at least one pyrithione compound selected from sodium pyrithione, potassium pyrithione and calcium pyrithione in a total amount in the range from 25 ppm to 500 ppm, based on the industrial product.

12. The use of at least one pyrithione compound selected from sodium pyrithione, potassium pyrithione and calcium pyrithione in an amount in the range from 25 ppm to 500 ppm for partial decomposition of 5-chloro-2-methyl-4-isothiazolinone in an industrial product containing:
i 25 ppm to 100 ppm of 5-chloro-2-methyl-4-isothiazolinone (CMIT) and
ii 50 ppm to 1000 ppm of one or more zinc compounds selected from the group consisting of zinc oxide, zinc carbonate and zinc hydroxide.

## Revendications

1. Procédé pour la réduction d'une attaque microbienne d'un produit technique aqueux, comprenant les étapes :
(a) mise à disposition d'un produit technique aqueux présentant une valeur de pH dans la plage de 7,0 à 9,5, contenant :
i. 25 à 100 ppm de 5-chloro-2-méthyl-4-isothiazolone (CMIT) et
ii. 50 ppm à 1000 ppm d'un ou de plusieurs composés de zinc, choisis dans le groupe constitué par l'oxyde de zinc, le carbonate de zinc et l'hydroxyde de zinc,
(b) décomposition d'une partie de la CMIT par ajout d'au moins un composé de pyrithione, choisi parmi la pyrithione de sodium, la pyrithione de potassium et la pyrithione de calcium en une quantité totale dans la plage de 25 ppm à 500 ppm, de telle sorte que la concentration en CMIT dans le produit technique se situe dans la plage de 5 à 15 ppm et
(c) entreposage du produit technique pendant une période de temps de jusqu'à 9 mois.

2. Procédé selon la revendication 1, **caractérisé en ce que** dans l'étape de procédé b), la décomposition d'une partie de la CMIT s'effectue dans une période de temps dans la plage de 6 heures à 336 heures après l'ajout dudit au moins un composé de pyrithione.

3. Procédé selon les revendications 1 ou 2, **caractérisé en ce que** dans l'étape de procédé (a), un produit technique présentant une valeur de pH dans la plage de pH 7,5 à pH 9,0 est mis à disposition.

4. Procédé selon l'une des revendications 1 à 3, **caractérisé en ce que** dans l'étape de procédé (a), un produit technique est mis à disposition, qui contient ii. 50 ppm à 1000 ppm d'oxyde de zinc.

5. Procédé selon l'une des revendications 1 à 4, **caractérisé en ce que** la décomposition de la CMIT dans l'étape de procédé (b) s'effectue par ajout de pyrithione de sodium en une quantité dans la plage de 25 ppm à 250 ppm.

6. Procédé selon l'une des revendications 1 à 5, **caractérisé en ce que** dans l'étape de procédé (a), un produit technique est mis à disposition, qui contient en outre :
iii. 5 ppm à 200 ppm d'un ou de plusieurs composés choisis dans le groupe constitué par la 2-méthylisothiazolin-3-one, la 1,2-benzo-isothiazolin-3-one, la 2-n-octyl-4-isothiazolin-3-one et la 2-méthyl-1,2-benzo-isothiazolin-3-one et/ou
iv. 10 ppm à 2000 ppm de 1,2-octanediol et/ou
v. 10 ppm à 2000 ppm d'éthylhexylglycérol et/ou
vi. 10 ppm à 9000 ppm de phénoxyéthanol et/ou
vi. 10 ppm à 200 ppm de carbamate de 3-iodopropargyl-N-butyle.

7. Procédé selon l'une des revendications 1 à 6, **caractérisé en ce que** dans l'étape de procédé (a), un produit technique est mis à disposition, qui contient i. 25 à 100 ppm de 5-chloro-2-méthyl-4-isothiazolone (CMIT) présentant une teneur en 2-méthyl-4-isothiazolin-3-one dans la plage de 0 à 2% en poids, par rapport à la proportion totale de la 5-chloro-2-méthyl-4-isothiazolin-3-one.

8. Procédé selon l'une des revendications 1 à 7, **caractérisé en ce que** dans l'étape de procédé (a), un produit technique est mis à disposition, qui est choisi parmi les peintures, telles que les peintures pour l'extérieur, les peintures pour l'intérieur et les peintures pour bois pour l'intérieur et l'extérieur, les vernis, les lasures, les encres d'imprimerie, les enduits pâteux, tels que les enduits pour l'extérieur et l'intérieur, les mastics, les émulsions, les latex, les dispersions de polymères, les apprêts, les suspensions de craie, les suspensions minérales, les masses céramiques, les adhésifs, les produits d'étanchéité, les émulsions de bitume, les solutions tensioactives, les agents de nettoyage, les pâtes pigmentaires et les dispersions pigmentaires, les suspensions pigmentaires, les épaississants, les produits cosmétiques, les articles de toilette, les liquides lithographiques, les liquides dans la transformation du papier, les liquides dans la fabrication du cuir et les liquides dans la fabrication de textiles.

9. Procédé selon l'une des revendications 1 à 8, **caractérisé en ce que** dans l'étape de procédé (a), une peinture ou un enduit est mis à disposition en tant que produit technique.

10. Procédé selon l'une des revendications 1 à 9, **caractérisé en ce que** le produit technique mis à disposition dans l'étape de procédé (a) contient de la 2-méthyl-4-isothiazolone en une quantité totale inférieure à 10 ppm, de préférence en une quantité totale inférieure à 5 ppm, de manière particulièrement préférée dans la plage de 0 à 1 ppm.

11. Procédé pour la dégradation partielle de 5-chloro-2-méthyl-4-isothiazolone, comprenant les étapes :
(a) disposition préalable d'un produit technique contenant :
i 25 à 100 ppm de 5-chloro-2-méthyl-4-isothiazolone (CMIT) et
ii 50 ppm à 1000 ppm d'un ou de plusieurs composés de zinc, choisis dans le groupe constitué par l'oxyde de zinc, le carbonate de zinc et l'hydroxyde de zinc et
(b) décomposition d'une partie de la CMIT par ajout d'au moins un composé de pyrithione, choisi parmi la pyrithione de sodium, la pyrithione de potassium et la pyrithione de calcium en une quantité totale dans la plage de 25 ppm à 500 ppm par rapport au produit technique.

12. Utilisation d'au moins un composé de pyrithione, choisi parmi la pyrithione de sodium, la pyrithione de potassium et la pyrithione de calcium en une quantité dans la plage de 25 ppm à 500 ppm pour la décomposition partielle de 5-chloro-2-méthyl-4-isothiazolone dans un produit technique, contenant :
i 25 à 100 ppm de 5-chloro-2-méthyl-4-isothiazolone (CMIT) et
ii 50 ppm à 1000 ppm d'un ou de plusieurs composés de zinc, choisis dans le groupe constitué par l'oxyde de zinc, le carbonate de zinc et l'hydroxyde de zinc.
